# EUROPÄISCHE PATENTSCHRIFT

(11) **EP 4 067 706 B1**
(45) Veröffentlichungstag und Bekanntmachung des Hinweises auf die Patenterteilung: **24.04.2024**
(21) Anmeldenummer: 22159592.9
(22) Anmeldetag: 02.03.2022
(51) Int. Cl.: F16J 15/16, F16J 15/3232, F16J 15/3252, F16J 15/3284, F16J 15/3244, F16J 15/34

(54) **DICHTRING**
SEALING RING
BAGUE D'ÉTANCHÉITÉ

(30) Priorität: 08.03.2021 DE 102021105500
(43) Veröffentlichungstag der Anmeldung: 05.10.2022
(73) Patentinhaber: Carl Freudenberg KG, 69469 Weinheim (DE)
(72) Erfinder: Prem, Erich, 69502 Hemsbach (DE); Frölich, Dr. Daniel, 69469 Weinheim (DE)

(56) Entgegenhaltungen:
- DE-A1- 1 700 135
- DE-A1-102015 003 072
- US-A- 2 945 708
- US-A- 4 962 936

## Beschreibung

### Technisches Gebiet

Die Erfindung betrifft einen Dichtring, umfassend einen in radialer Richtung innen des Dichtrings angeordneten statischen Dichtsitz und zwei in radialer Richtung außen des Dichtsitzes angeordnete Dichtlippen, wobei die Dichtlippen als Axialdichtlippen ausgebildet sind, wobei eine der Axialdichtlippen als radial innere erste und eine der Axialdichtlippen als radial äußere zweite Axialdichtlippe ausgebildet ist und wobei die zweite Axialdichtlippe die erste Axialdichtlippe mit radialem Abstand außenumfangsseitig umschließt.

### Stand der Technik

Ein solcher Dichtring ist allgemein bekannt. Der Dichtring ist mit seinem statischen Dichtsitz drehfest auf einem abzudichtenden ersten Maschinenelement, zum Beispiel einer Welle, angeordnet und liegt mit seinen beiden Axialdichtlippen dynamisch dichtend an einer sich in radialer Richtung erstreckenden Dichtfläche eines abzudichtenden zweiten Maschinenelements, zum Beispiel eines Gehäuses, das die Welle mit radialem Abstand umschließt, dichtend an.

Ein solche dynamische Abdichtung durch die Axialdichtlippen ist in der Regel schlecht bis gar nicht geschmiert. Insbesondere bei hohen Relativdrehzahlen der gegeneinander abzudichtenden Maschinenelemente kann es deshalb zu einem erhöhten Verschleiß und einem vorzeitigen Ausfall des Dichtrings kommen.

Wird die axiale Anpresskraft der Axialdichtlippen am abzudichtenden Maschinenelement reduziert, verringert sich zwar die Reibung und damit auch der Verschleiß, jedoch ebenso die Dichtwirkung, so dass eine Dichtungsanordnung, in der ein solcher Dichtring zur Anwendung gelangt, insgesamt keine zufriedenstellenden Gebrauchseigenschaften aufweist, insbesondere eine unerwünscht kurze Gebrauchsdauer.

Ein Dichtring mit den Merkmalen aus dem Oberbegriff von Anspruch 1 ist aus der DE 10 2015 003 072 A1 bekannt. Der Dichtring ist auf einem um eine Achse rotierbaren Element angeordnet und umfasst einen Stützkörper, der einen Zentraldurchgang umfängt, wobei der Stützkörper mit einem Elastomerkörper verbunden ist. Im Stützkörper sind Durchbrechungen und/ oder Ausnehmungen angeordnet, in welche der Elastomerkörper hineinragt. Der Dichtring umfasst zwei Dichtlippen, die in axialer Richtung orientiert sind, wobei sich die beiden Dichtlippen parallel zueinander erstrecken.

Beide Dichtlippen werden nicht stark deformiert und gleiten reibungsarm an einem abzudichtenden Maschinenelement. Dabei besteht nur eine geringe Überdeckung. Bei einer Rotation des Dichtrings können die Dichtlippen leicht abheben.

Die Dichtlippen können unterschiedlich lang ausgebildet sein, um an einem abzudichtenden Blech anliegen zu können, das gestuft ausgebildet ist oder zueinander geneigte Abschnitte aufweist.

Ein weiterer Dichtring ist aus der DE 1 700 135 A bekannt. Der Dichtring umfasst eine Axialdichtlippe, die hydrodynamische Rückförderstrukturen aufweist. Diese hydrodynamischen Rückförderstrukturen sorgen für eine Pumpwirkung auf das abzudichtende Medium während der bestimmungsgemäßen Verwendung des Dichtrings. Die Strukturen können spiral- oder schraubengangähnlich sein oder Ausnehmungen aufweisen. Die Strukturen wirken während des Betriebs des Dichtrings zum Beispiel wie Radialschaufeln einer Zentrifugalpumpe. Durch die Pumpwirkung wird der Abdichteffekt erhöht.

Ein weiterer Dichtring mit einer Axialdichtlippe ist aus der US 4,962,936 bekannt. Die Axialdichtlippe ist auf ihrer ihrem freien Ende abgewandten Seite an einem verjüngten Wurzelbereich festgelegt.

Der Dichtring ist stationär auf einer abzudichtenden Welle angeordnet. Die drehfeste und dichtende Anordnung erfolgt durch einen wellenförmigen Anker-Bereich, der Rippen umfasst, die sich in Umfangsrichtung erstrecken.

### Darstellung der Erfindung

Der Erfindung liegt die Aufgabe zu Grunde, einen Dichtring der eingangs genannten Art derart weiterzuentwickeln, dass er gute Gebrauchseigenschaften während einer langen Gebrauchsdauer aufweist, auch dann, wenn der Dichtring bei hohen Drehzahlen des abzudichtenden Maschinenelements eingesetzt wird. Der Dichtring soll außerdem reibungsarm und energieeffizient betrieben werden können. Außerdem sollen Verunreinigungen aus der Umgebung des Dichtrings von der Dichtstelle ferngehalten werden; die Verunreinigungen sollen daran gehindert werden, zu den Axialdichtlippen vor- und in einen abzudichtenden Raum einzudringen.

Diese Aufgabe wird erfindungsgemäß durch einen Dichtring gemäß Anspruch 1 gelöst. Auf vorteilhafte Ausgestaltungen nehmen die auf Anspruch 1 direkt oder indirekt rückbezogenen Ansprüche Bezug.

Zur Lösung der Aufgabe ist ein Dichtring vorgesehen, wie eingangs beschrieben, wobei die erste Axialdichtlippe einen größere Flexibilität in radialer Richtung aufweist als die zweite Axialdichtlippe, wobei die zweite Axialdichtlippe radial außenseitig auf der der ersten Axialdichtlippe radial abgewandten Seite eine während der bestimmungsgemäßen Verwendung des Dichtrings aerodynamisch aktive Oberflächenstruktur zur Verwirbelung der an die Oberflächenstruktur angrenzenden Luftschicht und zur Abwehr von Verunreinigungen aus der Umgebung des Dichtrings aufweist, wobei die Oberflächenstruktur Erhöhungen und Vertiefungen aufweist, die, in Umfangsrichtung betrachtet, alternierend ausgebildet sind.

Zur Funktion des Dichtrings wird Folgendes ausgeführt:
Auch bei hohen Drehzahlen wird durch die Ausgestaltung und Anordnung der Axialdichtlippen nur ein geringes Reibmoment erzeugt, und die Energieverluste während des Betriebs des Dichtrings sind minimal.

Die radial innere erste Axialdichtlippe ist derart ausgelegt, dass sie bei höheren Drehzahlen fliehkraftbedingt entlastet und dadurch nur ein geringes Reibmoment erzeugt. Um die dadurch entstehende leicht verminderte Dichtsicherheit zu kompensieren, ist die Oberflächenstruktur auf der radial abgewandten Seite der zweiten Axialdichtlippe vorgesehen, die bei Rotation des Dichtrings, also während der bestimmungsgemäßen Verwendung, einen verwirbelten Luftstrom erzeugt. Dieser Luftstrom hält Verunreinigungen von der Dichtstelle fern und kompensiert die verminderte Dichtsicherheit, die durch die fliehkraftbedingt reduzierte Anpressung der ersten Axialdichtlippe entsteht. Bemerkenswert ist, dass die vorteilhaften Gebrauchseigenschaften durch die Oberflächenstruktur erreicht werden, ohne dass ein zusätzliches Reibmoment erzeugt wird.

Durch die Kombination der fliehkraftentlasteten ersten Axialdichtlippe mit der aerodynamisch aktiven Oberflächenstruktur der zweiten Axialdichtlippe kann der Dichtring auch bei hohen Drehzahlen sehr reibungsarm und energieeffizient betrieben werden. Gleichzeitig wird bei allen Drehzahlen eine nahezu einheitliche Robustheit des Dichtrings und damit einer Dichtungsanordnung erzielt, in der der Dichtring zur Anwendung gelangt. Bei geringen Drehzahlen kommt die Robustheit von den eine abzudichtende Oberfläche berührenden Axialdichtlippen, bei höheren Drehzahlen primär von dem erzeugten Luftstrom durch die aerodynamisch aktive Oberflächenstruktur.

Dadurch, dass der statische Dichtsitz drehfest auf einem abzudichtenden Maschinenelement angeordnet ist, dreht er mit der Drehzahl von diesem mit.

Um eine möglichst lange Gebrauchsdauer bei gleichbleibend guten Gebrauchseigenschaften zu erzielen, kann der erfindungsgemäße Dichtring eine intrinsische Schmierung aufweisen.

Um die intrinsische Schmierung der dynamisch wirksamen Axialdichtlippen zu realisieren, kann es nach einer ersten Ausgestaltung vorgesehen sein, dass in radialer Richtung zwischen den beiden Axialdichtlippen ein Fettdepot angeordnet ist. Bei der Auslegung der Axialdichtlippen ist darauf zu achten, dass die radial äußere steif genug dimensioniert ist, dass sie das verwendete Fett zurückhält.

Nach einer zweiten Ausgestaltung kann es vorgesehen sein, dass die Axialdichtlippen eine reibungsverringernde und damit verschleißreduzierende Oberflächenbeschichtung aufweisen.

Auch können das Fettdepot und die verschleißreduzierende Beschichtung miteinander kombiniert werden.

Die Oberflächenstruktur weist Erhöhungen und Vertiefungen auf, die, in Umfangsrichtung betrachtet, alternierend ausgebildet sind. Die aerodynamische Oberflächenstruktur kann dabei, in Abhängigkeit vom jeweiligen Anwendungsfall, unterschiedlich ausgebildet sein. Beispielsweise besteht die Möglichkeit, die Oberflächenstruktur derart auszubilden, dass sie unabhängig von der Drehrichtung des Dichtrings stets gleichbleibend gut funktioniert.

Nach einer anderen Ausgestaltung kann es vorgesehen sein, dass die Oberflächenstruktur laufrichtungsgebunden wirksam ist und deshalb nur in einer Rotationsrichtung funktioniert.

Durch die Umlenkung des Luftstroms im Bereich der Oberflächenstruktur wird die an die Oberflächenstruktur angrenzende Luftschicht verwirbelt. Daraus resultierend werden Verunreinigungen aus der Umgebung daran gehindert, zu den Axialdichtlippen vor- und in einen abzudichtenden Raum einzudringen.

Gemäß einer vorteilhaften Ausgestaltung kann es vorgesehen sein, dass der statische Dichtsitz und die Axialdichtlippen jeweils aus einem gummielastischen Dichtungswerkstoff bestehen. Gummielastische Dichtungswerkstoffe sind in vielen unterschiedlichen Spezifikationen für unterschiedliche Anwendungsfälle bekannt und häufig einfach verfügbar.

Der Dichtsitz und die Axialdichtlippen sind bevorzugt einstückig ineinander übergehend und materialeinheitlich ausgebildet. Der Dichtring ist dadurch einfach, prozesssicher und kostengünstig herstellbar sowie weitgehend sortenrein recyclebar.

Der Dichtring kann einen im Wesentlichen L-förmigen Stützkörper aus einem zähharten Werkstoff umfassen, wobei der Stützkörper vom gummielastischen Dichtungswerkstoff zumindest im Wesentlichen umschlossen ist. Hierbei ist von Vorteil, dass der statische Dichtsitz durch den Stützkörper zuverlässig und dichtend auf einem Maschinenelement, beispielsweise auf einer Welle, gehalten wird. Im eingebauten Zustand des Dichtrings umschließt ein Schenkel des Stützkörpers den Dichtsitz außenumfangsseitig und mit radialer Vorspannung. Außerdem ist von Vorteil, dass der Stützkörper durch den Dichtungswerkstoff vor Umgebungseinflüssen gut geschützt ist. Eines separat aufzubringenden Korrosionsschutzes bedarf es deshalb beispielsweise nicht.

Der Stützkörper kann einen Axialschenkel umfassen, der den statischen Dichtsitz radial außenumfangsseitig umschließt. Durch den Axialschenkel wird der statische Dichtsitz unter elastischer Vorspannung dichtend auf eine abzudichtende Oberfläche eines abzudichtenden Maschinenelements einer Dichtungsanordnung gedrückt.

Der Stützkörper kann außerdem einen Radialschenkel umfassen, an dem die Axialdichtlippen angelenkt sind. Die räumliche Zuordnung der Axialdichtlippen zueinander und zu dem statischen Dichtsitz ist durch den Stützkörper klar definiert. Eine relaxationsbedingte Verformung des Dichtrings wird durch den Stützkörper praktisch verhindert.

Die erste Axialdichtlippe kann auf ihrer ihrem freien Ende abgewandten Seite einen gelenkartigen Wurzelbereich aufweisen, der, im Querschnitt betrachtet, verjüngt ausgebildet ist. Durch eine solche Ausgestaltung weist die erste Axialdichtlippe eine größere Flexibilität in radialer Richtung auf als die zweite Axialdichtlippe. Durch den gelenkartigen Wurzelbereich wird die Anpressung der ersten Axialdichtlippe an eine abzudichtende Fläche während der bestimmungsgemäßen Verwendung des Dichtrings bei Rotation deutlich und soweit reduziert, dass die Reibung ebenfalls reduziert und die Energieeffizienz des Dichtrings erhöht wird. Die erste Axialdichtlippe ist derart ausgelegt, dass sie eine abzudichtende Fläche bei maximaler Drehzahl entweder geradeso, praktisch ohne axiale Vorspannung, anliegend berührt oder sogar von der abzudichtenden Fläche abhebt. Die erste Axialdichtlippe erzeugt dann praktisch kein Reibmoment.

Die Dichtwirkung wird dann im Wesentlichen nur noch von der radial äußeren zweiten Axialdichtlippe bewirkt.

Die zweite Axialdichtlippe wird derart ausgelegt, dass sie die abzudichtende Fläche "geradeso berührt". D. h., je nach Toleranzlage entsteht hier eine geringfügige Überdeckung oder ein minimaler Spalt. Bei Maximaldrehzahl wird die erste Axialdichtlippe in ihrer Anpresskraft an die Gegenlauffläche zwar deutlich entlastet aber nicht abheben. Die aerodynamische Dichtwirkung kompensiert die reduzierte Dichtwirkung aufgrund geringerer axialer Anpressung der radial inneren ersten Axialdichtlippe.

### Kurzbeschreibung der Zeichnung

Ein Ausführungsbeispiel des erfindungsgemäßen Dichtrings wird nachfolgend anhand der Figuren 1 bis 3 näher erläutert.

Diese zeigen jeweils in schematischer Darstellung:
- Figur 1: eine Dichtungsanordnung, in der der erfindungsgemäße Dichtring zur Anwendung gelangt,
- Figur 2: eine perspektivische Ansicht des Dichtrings aus Figur 1 und
- Figur 3: eine vergrößerte Darstellung der Oberfläche des Dichtrings aus Figur 2.

### Ausführung der Erfindung

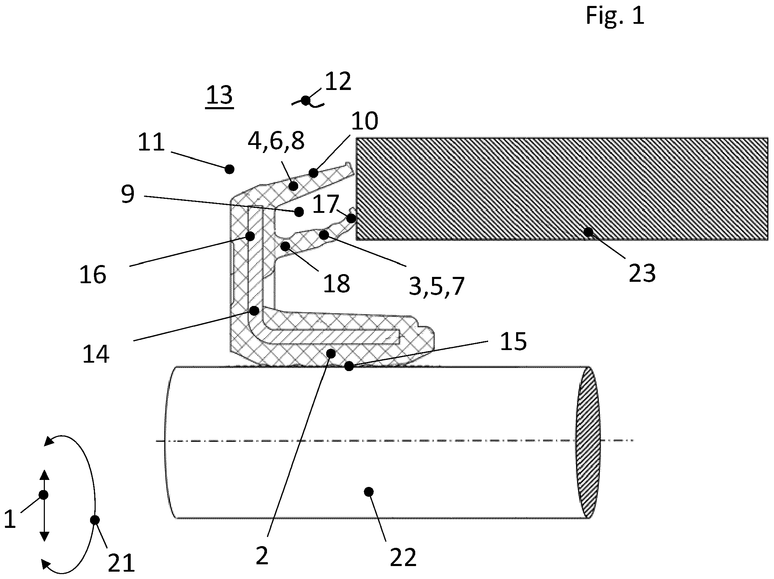

In Figur 1 ist eine Dichtungsanordnung im Schnitt gezeigt. In der Dichtungsanordnung gelangt der erfindungsgemäße Dichtring zur Anwendung.

Der Dichtring dichtet zwei Maschinenelemente 22, 23 gegeneinander ab. Im gezeigten Ausführungsbeispiel ist das erste Maschinenelement 22 durch eine abzudichtende Welle, das zweite Maschinenelement 23 durch ein abzudichtendes Gehäuse gebildet.

Der Dichtring ist durch seinen statischen Dichtsitz 2 drehfest auf dem ersten Maschinenelement 22 angeordnet. Die Abdichtung zwischen dem Dichtring und dem ersten Maschinenelement 22 erfolgt durch den in radialer Richtung 1 des Dichtrings innen angeordneten statischen Dichtsitz 2.

Das zweite Maschinenelement 23 wird durch die Dichtlippen 3, 4 abgedichtet, die jeweils als Axialdichtlippe 5, 6 ausgebildet sind. Die erste Axialdichtlippe 7 ist radial innen, die zweite Axialdichtlippe 8 radial außen des Dichtrings angeordnet.

In dem durch den radialen Abstand 9 gebildeten Spalt zwischen den beiden Axialdichtlippen 7, 8 kann ein Sperrfett angeordnet sein.

Die erste Axialdichtlippe 7 weist eine größere Flexibilität in radialer Richtung 1 auf als die zweite Axialdichtlippe 8. Auf ihrer ihrem freien Ende 17 abgewandten Seite weist die erste Axialdichtlippe 7 den gelenkartigen Wurzelbereich 18 auf, der, wie hier dargestellt, im Querschnitt betrachtet verjüngt ausgebildet ist.

Die zweite Axialdichtlippe 8 hat radial außenseitig auf der der ersten Axialdichtlippe 7 radial abgewandten Seite die aerodynamisch wirksame Oberflächenstruktur 10. Bei Rotation des Dichtrings entstehen dadurch Verwirbelungen der an die Oberflächenstruktur 10 angrenzenden Luftschicht 11, und Verunreinigungen 12 aus der Umgebung 13 werden abgewehrt.

Je höher die Drehzahl, mit der der Dichtring gemeinsam mit dem abzudichtenden ersten Maschinenelement 22 umläuft, desto geringer wird die Anpressung der ersten Axialdichtlippe 7 an die abzudichtende Oberfläche des zweiten Maschinenelements 23.

Je höher die Drehzahl, desto wirksamer ist die Oberflächenstruktur 10, die die zweite Axialdichtlippe 8 außenumfangsseitig umschließt.

Die erste Axialdichtlippe 7 und die zweite Axialdichtlippe 8 wirken zusammen, um eine gute Dichtwirkung während einer langen Gebrauchsdauer durch minimale Reibung bei hoher Energieeffizienz zu erreichen.

Die Dichtwirkung des Dichtrings ist vom Stillstand des abzudichtenden ersten Maschinenelements 22 bis zu dessen maximaler Drehzahl im Wesentlichen konstant. Im Stillstand und bei niedriger Drehzahl berührt die erste Axialdichtlippe 7 das zweite Maschinenelement mit einer relativ großen axialen Vorspannung dichtend anliegend. Die Oberflächenstruktur 10 der zweiten Axialdichtlippe 8 hat auf die Dichtwirkung praktisch keinen Einfluss.

Bei Erhöhung der Drehzahl verringert sich die Anpressung der ersten Axialdichtlippe 7 an dem abzudichtenden zweiten Maschinenelement 23, wobei gleichzeitig die Wirksamkeit der Oberflächenstruktur 10 zur Abwehr von Verunreinigungen 12 aus der Umgebung 13 zunimmt.

Im gezeigten Ausführungsbeispiel sind der Dichtsitz 2 und die Axialdichtlippen 7, 8 einstückig ineinander übergehend und materialeinheitlich ausgebildet und bestehen aus einem gummielastischen Dichtungswerkstoff. Der Dichtring weist einen L-förmigen Stützkörper 14 auf, der zum Beispiel aus einem metallischen Werkstoff besteht. Der Stützkörper sorgt für eine gute Formstabilität des Dichtrings.

Der Axialschenkel 15 des Stützkörpers 14 bewirkt eine gute Dichtwirkung des statischen Dichtsitzes 2 auf der Oberfläche des ersten Maschinenelements 22. Am Radialschenkel 16 sind demgegenüber die Axialdichtlippen 7, 8 angelenkt.

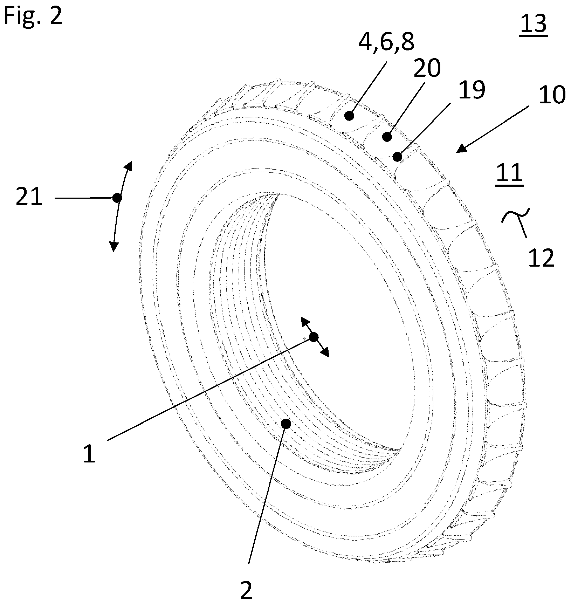

In Figur 2 ist der Dichtring aus Figur 1 in einer perspektivischen Ansicht gezeigt.

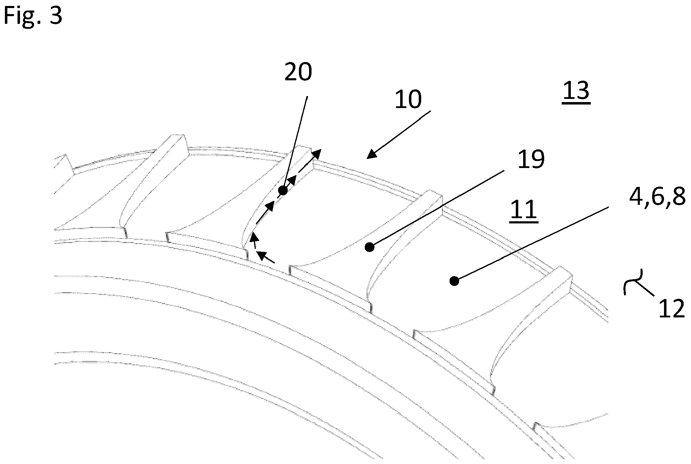

In Figur 3 ist der Außenumfang des Dichtrings aus Figur 2 in vergrößerter Darstellung gezeigt. Die Oberflächenstruktur 10 ist durch Erhöhungen 19 und Vertiefungen 20 gebildet, wobei sich die Erhöhungen 19 und die Vertiefungen 20 in Umfangsrichtung 21 alternierend entlang des Umfangs erstrecken.

## Patentansprüche

1. Dichtring, umfassend einen in radialer Richtung (1) innen des Dichtrings angeordneten statischen Dichtsitz (2) und zwei in radialer Richtung (1) außen des Dichtsitzes (2) angeordnete Dichtlippen (3, 4), wobei die Dichtlippen (3, 4) als Axialdichtlippen (5, 6) ausgebildet sind, wobei eine der Axialdichtlippen (5) als radial innere erste (7) und eine der Axialdichtlippen (6) als radial äußere zweite Axialdichtlippe (8) ausgebildet ist, wobei die zweite Axialdichtlippe (8) die erste Axialdichtlippe (7) mit radialem Abstand (9) außenumfangsseitig umschließt, **dadurch gekennzeichnet, dass** die erste Axialdichtlippe (7) eine größere Flexibilität in radialer Richtung (1) aufweist als die zweite Axialdichtlippe (8), wobei die zweite Axialdichtlippe (8) radial außenseitig, auf der der ersten Axialdichtlippe (7) radial abgewandten Seite eine während der bestimmungsgemäßen Verwendung des Dichtrings aerodynamisch aktive Oberflächenstruktur (10) zur Verwirbelung der an die Oberflächenstruktur (10) angrenzenden Luftschicht (11) und zur Abwehr von Verunreinigungen (12) aus der Umgebung (13) des Dichtrings aufweist und dass die Oberflächenstruktur (10) Erhöhungen (19) und Vertiefungen (20) aufweist, die, in Umfangsrichtung (21) betrachtet, alternierend ausgebildet sind.

2. Dichtring nach Anspruch 1, **dadurch gekennzeichnet, dass** der statische Dichtsitz (2) und die Axialdichtlippen (7, 8) jeweils aus einem gummielastischen Dichtungswerkstoff bestehen.

3. Dichtring nach einem der Ansprüche 1 oder 2, **dadurch gekennzeichnet, dass** der Dichtsitz (2) und die Axialdichtlippen (7, 8) einstückig ineinander übergehend und materialeinheitlich ausgebildet sind.

4. Dichtring nach einem der Ansprüche 1 bis 3, **dadurch gekennzeichnet, dass** der Dichtring einen im Wesentlichen L-förmigen Stützkörper (14) aus einem zähharten Werkstoff umfasst und dass der Stützkörper (14) vom gummielastischen Dichtungswerkstoff zumindest im Wesentlichen umschlossen ist.

5. Dichtring nach Anspruch 4, **dadurch gekennzeichnet, dass** der Stützkörper (14) einen Axialschenkel (15) umfasst, der den statischen Dichtsitz (2) radial außenumfangsseitig umschließt.

6. Dichtring nach einem der Ansprüche 4 oder 5, **dadurch gekennzeichnet, dass** der Stützkörper (14) einen Radialschenkel (16) umfasst, an dem die Axialdichtlippen (7, 8) angelenkt sind.

7. Dichtring nach einem der Ansprüche 1 bis 6, **dadurch gekennzeichnet, dass** die erste Axialdichtlippe (7) auf ihrer ihrem freien Ende (17) abgewandten Seite einen gelenkartigen Wurzelbereich (18) aufweist, der, im Querschnitt betrachtet, verjüngt ausgebildet ist.

## Claims

1. Sealing ring comprising a static sealing seat (2), which is arranged on the inside of the sealing ring in a radial direction (1), and two sealing lips (3, 4), which are arranged on the outside of the sealing seat (2) in the radial direction (1), wherein the sealing lips (3, 4) are in the form of axial sealing lips (5, 6), wherein one of the axial sealing lips (5) is in the form of a radially inner, first axial sealing lip (7) and one of the axial sealing lips (6) is in the form of a radially outer, second axial sealing lip (8), wherein the second axial sealing lip (8) surrounds the first axial sealing lip (7) on the outer circumferential side with a radial spacing (9), **characterized in that** the first axial sealing lip (7) has greater flexibility in the radial direction (1) than the second axial sealing lip (8), wherein, radially on the outside, on the side which is directed radially away from the first axial sealing lip (7), the second axial sealing lip (8) has a surface structure (10) which is aerodynamically active during intended use of the sealing ring and which serves for swirling of the air layer (11) adjoining the surface structure (10) and which serves for repelling contaminants (12) from the surroundings (13) of the sealing ring, and **in that** the surface structure (10) has elevations (19) and depressions (20) which, as viewed in a circumferential direction (21), are formed in an alternating manner.

2. Sealing ring according to Claim 1, **characterized in that** the static sealing seat (2) and the axial sealing lips (7, 8) consist in each case of a rubber-elastic seal material.

3. Sealing ring according to one of Claims 1 or 2, **characterized in that** the sealing seat (2) and the axial sealing lips (7, 8) are formed from the same material and so as to transition into one another in an integral manner.

4. Sealing ring according to one of Claims 1 to 3, **characterized in that** the sealing ring comprises a substantially L-shaped supporting body (14) composed of a tough, hard material, and **in that** the supporting body (14) is surrounded at least substantially by the rubber-elastic seal material.

5. Sealing ring according to Claim 4, **characterized in that** the supporting body (14) comprises an axial leg (15) which surrounds the static sealing seat (2) radially on the outer circumferential side.

6. Sealing ring according to one of Claims 4 or 5, **characterized in that** the supporting body (14) comprises a radial leg (16) on which the axial sealing lips (7, 8) are articulated.

7. Sealing ring according to one of Claims 1 to 6, **characterized in that**, on its side which is directed away from its free end (17), the first axial sealing lip (7) has a joint-like root region (18) which, as viewed in cross section, is of tapered form.

## Revendications

1. Bague d'étanchéité, comprenant un siège d'étanchéité statique (2) disposé dans une direction radiale (1) à l'intérieur de la bague d'étanchéité et deux lèvres d'étanchéité (3, 4) disposées dans la direction radiale (1) à l'extérieur du siège d'étanchéité (2), dans laquelle les lèvres d'étanchéité (3, 4) sont réalisées sous forme de lèvres d'étanchéité axiales (5, 6), dans laquelle l'une des lèvres d'étanchéité axiales (5) est réalisée sous la forme d'une première lèvre d'étanchéité radialement intérieure (7) et l'une des lèvres d'étanchéité axiales (6) est réalisée sous la forme d'une deuxième lèvre d'étanchéité axiale radialement extérieure (8), dans laquelle la deuxième lèvre d'étanchéité axiale (8) entoure la première lèvre d'étanchéité axiale (7) avec un espacement radial (9) côté circonférence extérieure,
**caractérisée en ce que** la première lèvre d'étanchéité axiale (7) présente une plus grande flexibilité dans la direction radiale (1) que la deuxième lèvre d'étanchéité axiale (8), dans laquelle la deuxième lèvre d'étanchéité axiale (8) présente côté radialement extérieur, sur le côté radialement détourné de la première lèvre d'étanchéité axiale (7), une structure de surface (10) aérodynamiquement active pendant l'utilisation conforme de la bague d'étanchéité pour faire tourbillonner la couche d'air (11) adjacente à la structure de surface (10) et pour chasser des impuretés (12) de l'environnement (13) de la bague d'étanchéité, et **en ce que** la structure de surface (10) présente des bossages (19) et des creux (20) qui sont réalisés en alternance, vus dans la direction circonférentielle (21).

2. Bague d'étanchéité selon la revendication 1, **caractérisée en ce que** le siège d'étanchéité statique (2) et les lèvres d'étanchéité axiales (7, 8) sont composés respectivement d'un matériau d'étanchéité élastique.

3. Bague d'étanchéité selon l'une quelconque des revendications 1 ou 2, **caractérisée en ce que** le siège d'étanchéité (2) et les lèvres d'étanchéité axiales (7, 8) sont réalisés d'un seul tenant en passant les uns aux autres et venant de matière.

4. Bague d'étanchéité selon l'une quelconque des revendications 1 à 3, **caractérisée en ce que** la bague d'étanchéité comprend un corps de support (14) substantiellement en forme de L, composé d'un matériau extra-rigide, et **en ce que** le corps de support (14) est au moins substantiellement entouré du matériau d'étanchéité élastique.

5. Bague d'étanchéité selon la revendication 4, **caractérisée en ce que** le corps de support (14) comprend une branche axiale (15) qui entoure le siège d'étanchéité statique (2) radialement côté circonférence extérieure.

6. Bague d'étanchéité selon l'une quelconque des revendications 4 ou 5, **caractérisée en ce que** le corps de support (14) comprend une branche radiale (16) au niveau de laquelle les lèvres d'étanchéité axiales (7, 8) sont articulées.

7. Bague d'étanchéité selon l'une quelconque des revendications 1 à 6, **caractérisée en ce que** la première lèvre d'étanchéité axiale (7) présente sur son côté détourné de son extrémité libre (17) une zone de base (18) de type articulation qui est réalisée en s'amincissant, vue en section transversale.
